# EUROPEAN PATENT APPLICATION

(11) **EP 2 222 030 A1**
(43) Date of publication of application: **25.08.2010**
(21) Application number: 08856058.6
(22) Date of filing: 02.12.2008
(51) Int. Cl.: H04L 12/28, H04L 9/32, H04L 12/46

(54) **DHCP CLIENT SERVER SYSTEM, DHCP CLIENT DEVICE AND DHCP SERVER DEVICE**

(30) Priority: 05.12.2007 JP 2007314148
(71) Applicant: Hitachi, Ltd., Chiyoda-ku Tokyo 100-8280 (JP)
(72) Inventor: YOSHIMOTO, Tetsuro, Tokyo 100-8220 (JP); INOUCHI, Hidenori, Tokyo 100-8220 (JP)
(74) Representative: MERH-IP Matias Erny Reichl Hoffmann
(86) International application number: PCT/JP2008/003564
(87) International publication number: WO 2009/072271

(57) **Abstract**

A conventional DHCP authentication method could not cope with a one-phase two-messages DHCP sequence involved in a Rapid-Commit option. Further, in the conventional DHCP authentication method, it is possible to replay attack at lease renewal timing and, when information used in a retransmission method between a client and a server becomes the loss of synchronization, the conventional DHCP authentication method cannot detect the loss of synchronization and has such a problem that unnecessary traffics are continuously produced. A DHCP client device includes a means that stores a user ID, a secret key, and retransmission detection method (RDM) information. A DHCP server device includes a database that is available for the retrieval of a secret key and RMD information based on a user ID as a key or an access mechanism to an external DB with the same function as that of the database.

## Description

### TECHNICAL FIELD

The present invention relates to an authentication method for a DHCP client server system.

### BACKGROUND ART

In the past, an authentication method in a DHCP client server system has preconditioned a two-phase four-message DHCP sequence. A DHCP client device has made an authentication request to a server after receiving provision of authentication information from a DHCP server device.

According to Delayed Authentication defined in, for example, non-patent document 1 and non-patent document 2, authentication information is not included in Discover DHCPv4) or Solicit (DHCPv6) that is the first DHCP message from a client. A secret key to be used is determined based on authentication information included in Offer (DHCPv4) or Advertise (DHCPv6) that is the first message from a server in order to produce a hash of the message. Thereafter, a hash value is transmitted in a Request message. Thus, authentication is performed on a DHCP client device.

In patent document 1, authentication information is not included in Discover (DHCPv4) or Solicit (DHCPv6) that is the first DHCP message from a client. A hash value is produced based on an Identifier value and a Challenge value included in Offer (DHCPv4) or Advertise (DHCPv6) that is the first message from a server. Thereafter, the hash value is transmitted in a Request message. Thus, authentication is performed on a DHCP client device.

Patent Document 1: Japanese Patent Application Laid-Open Publication No.2006-115033
Non-patent Document 1: "Dynamic Host Configuration Protocol for IPv6 (DHCPv6)" by Bound H., Carney M., Perkins C., Lemon T., Volz B., and R. Droms (ed.) (RFC 3315, May 2003)
Non-patent Document 2: "Authentication for DHCP Messages" by Droms R. (ed.), and W. Arbaugh (ed.) (RFC 3118, June 2001)
Non-patent Document 3: "Rapid Commit Option for the Dynamic Host Configuration Protocol version 4 (DHCPv4)" by Park S., Kim P., and B. Volz (RFC 4039, March 2005)

### DISCLOSURE OF THE INVENTION

### PROBLEMS TO BE SOLVED BY THE INVENTION

The methods are confronted with an issue that the methods cannot be utilized in a one-phase two-message DHCP sequence dependent on a Rapid-Commit option specified in the non-patent document 1 and non-patent document 3.

In the method in the patent document 1, timings at which a Challenge value is updated include only the timing of Offer (DHCPv4) or Advertise (DHCPv) and the timing of Force Renew (DHCPv4) or Reconfigure (DHCPv6). This poses a problem in that a replay attack may be enabled, that is, an attacker connected to a network segment at the same timing as the timing of lease renewal may fraudulently succeed in authentication without a secret key by capturing a packet in an authentic sequence and retransmitting the packet to a server.
In the method in the non-patent document 2, the issue of a replay attack is avoided by introducing a retransmission detection method (RDM) that detects a replay attack by varying a hash value every time using, in addition to a secret key, retransmission detection information (RDM information), which is a value to be changed every time through certain computation (for example, every-time increment), during hash calculation. However, since it is stipulated that a packet having failed in authentication is discarded, even if a value of RDM information is different under some circumstances between a server and a client, the server and client cannot recognize the state. This poses a problem in that retransmission is continued because authentication cannot be achieved.

As mentioned above, a conventional DHCP authentication means has a drawback that it cannot be applied to the one-phase two-message sequence dependent on the Rapid-Commit option.

The first object of the present invention is to provide a DHCP authentication method usable even in a case where a Rapid-Commit option is employed.

A conventional DHCP authentication means has a drawback that it cannot fully prevent a replay attack or that when State Abnormal in a retransmission detection method occurs, it allows wasteful traffic to keep generated.

The second object of the present invention is to provide a DHCP authentication method capable of quickly restoring a state in case of State Abnormal in a retransmission detection method while fully preventing a replay attack.

### MEANS OF SOLVING THE PROBLEMS

A DHCP client device includes a means for storing a user ID, a secret key, and retransmission detection method (RDM) information. A DHCP server device may include a database (DB) that is searchable for the secret key and RDM information with the user ID as a key, or an access feature for an external DB having the same capability. Prior to initiation of DHCP processing, the initial values of the user ID, secret key, and RDM information in the client device may be squared with those in the server device.

The DHCP client device may include an authentication option, which contains three data items of a hash value obtained by applying a hash function such as MD5, SHA-1, or SHA-2 to a data stream including at least the secret key and RDM information, the user ID, and the RDM information, in a DHCP message, and transmit the DHCP message to the server device. The DHCP message may be Discover (DHCPv4) or Solicit (DHCPv6) that is the first message in a DHCP sequence.

When receiving a DHCP message including the authentication option, the DHCP server device extracts the user ID, hash value, and RDM information from the option, and searches the DB with the user ID a key so as to retrieve the secret key and RDM information. The RDM information extracted from the option and the RDM information retrieved from the DB are compared with each other according to a predetermined technique (for example, comparison in a size). If a decision is made that the message is a retransmission (for example, if the RDM information extracted from the option is equal to or smaller than the RDM information retrieved from the DB), a response message including an authentication failure option is transmitted. At this time, the RDM information retained in the DB is contained in the authentication failure option.

If a decision is made that the message is not a retransmission, a hash value is calculated using the secret key retrieved from the DB and the RDM information extracted from the option, and compared with the hash value extracted from the option. If the hash values are squared with each other, it is recognized as an authentication success, and a response message including an authentication success option is transmitted. If the hash values are not squared with each other, a response message including the authentication failure option is transmitted.

When receiving a response message that includes an authentication success or authentication failure option, the DHCP client device updates the own RDM information according to a predetermined technique (for example, increment).

When receiving a response message including the authentication failure option that especially contains RDM information, the DHCP client device overwrites the information contained in the authentication failure option with the own RDM information, updates the own RDM information according to the predetermined technique, and transmits the DHCP message again.

An example of the present invention is a DHCP client server system including a DHCP server device and a DHCP client device. The DHCP client device includes: a means for storing a user ID, a secret key, and retransmission detection information; a means for calculating key authentication information from a data stream containing the secret key and retransmission detection information; a means for transmitting a DHCP message that includes the user ID, retransmission detection information, and key authentication information; and a means for performing update through computation of the retransmission detection information. The DHCP server device includes: a means for, when receiving the DHCP message, extracting the user ID, retransmission detection information, and key authentication information from the DHCP message; a database search facility that retrieves the secret key and retransmission detection information on the basis of the user ID extracted fro the DHCP message; a means for comparing the retransmission detection information, which is extracted from the DHCP message, with the retransmission detection information retrieved from the database so as to detect a retransmission circumstance; a means for calculating the key authentication information from a data stream containing the retransmission detection information extracted from the DHCP message and the secret key retrieved from the database; and a means for collating the calculated key authentication information with the key authentication information, which is extracted from the DHCP message, so as to decide about authentication.

### EFFECTS OF THE INVENTION

According to the present invention, DHCP authentication can be provided even for a one-phase two-message DHCP sequence employing a Rapid-Commit option.

According to the present invention, while a replay attack is prevented, a state can be quickly restored in case of State Abnormal in a retransmission detection method.

### BEST MODE FOR CARRYING OUT THE INVENTION

### Embodiment 1

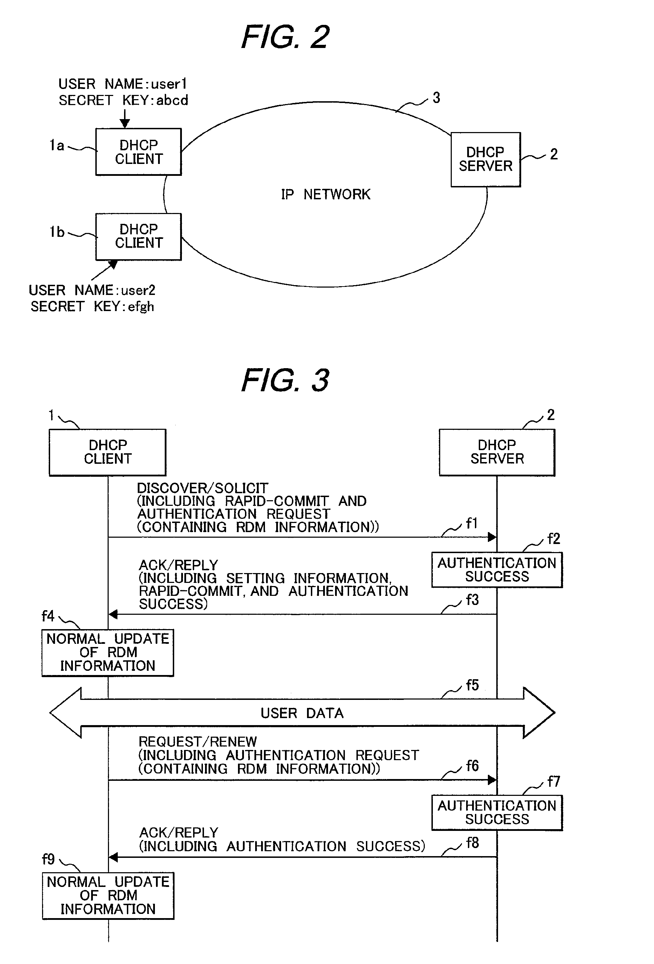

Fig. 2 illustrates an example of a typical network to which the present invention is applied. DHCP client devices 1 (1a and 1b) and a DHCP server device 2 are interconnected over an IP network 3.

Fig. 3 illustrates a one-phase two-message DHCP sequence employing Rapid-Commit and signifying a case where a system of the present invention has succeeded in authentication. The DHCP client device 1 sends out a Discover (DHCPv4) or Solicit (DHCPv6) message f1 including a Rapid-Commit option and an option that signifies an authentication request. The option signifying the authentication request and being included in the f1 contains a user ID, RDM information, and a hash value produced from a secret key and the RDM information. After receiving the message f1, the DHCP server device 2 extracts the user ID, RDM information, and hash value from the authentication option, and searches the DB with the user ID as a key so as to retrieve the secret key and RDM information. The RDM information extracted from the authentication option and the RDM information retrieved from the DB are compared with each other according to a predetermined technique (for example, comparison in a size). If a decision is made that the message is not a retransmission, a hash value is calculated using the secret key retrieved from the DB and the RDM information extracted from the option, and compared with the hash value extracted from the option. If the hash values are squared with each other, it is recognized as an authentication success (f2). An ACK (DHCPv4) or Reply message including various pieces of setting information such as the Rapid-Commit option, an authentication success option, and an IP address or prefix is transmitted (f3). The DHCP client device 1 having received the ACK or Reply message including the authentication success option updates the own RDM information according to a predetermined technique (for example, increment) (f4). In addition, the DHCP client device performs its settings on the basis of the pieces of setting information included in the message. Through the foregoing sequence, user data becomes communicable (f5). Since the IP address or prefix notified under the DHCP has an expiration date, it is necessary to renew the expiration date prior to the expiration (lease renewal). When authentication is performed at the time of lease renewal, the authentication is performed according to a sequence described below. The DHCP client device 1 sends out a Request (DHCPv4) or Renew (DHCPv6) message f6 including an option that signifies an authentication request. The option signifying the authentication request and being included in the f6 contains a user ID, RDM information, and a hash value produced from a secret key and the RDM information. After receiving the message f6, the DHCP server device 2 extracts the user ID, RDM information, and hash value from the authentication option, and searches the DB with the user ID as a key so as to retrieve the secret key and RDM information. The RDM information extracted from the authentication option and the RDM information retrieved from the DB are compared with each other according to a predetermined technique (for example, comparison in a size). If a decision is made that the message is not a retransmission, a hash value is calculated using the secret key retrieved from the DB and the RDM information extracted from the option, and compared with the hash value extracted from the option. If the hash values are squared with each other, it is recognized as authentication success (f7). An ACK (DHCPv4) or Reply (DHCPv6) message including an authentication success option and a new expiration date of an IP address or prefix is transmitted (f8). The DHCP client device 1 having received the ACK or Reply message including the authentication success option updates the own RDM information according to a predetermined technique (for example, increment) (f9).
In addition, the DHCP client device renews the expiration date of the IP address or prefix on the basis of the new expiration data included in the message. Through the foregoing procedure, lease renewal for the IP address or prefix is carried out.

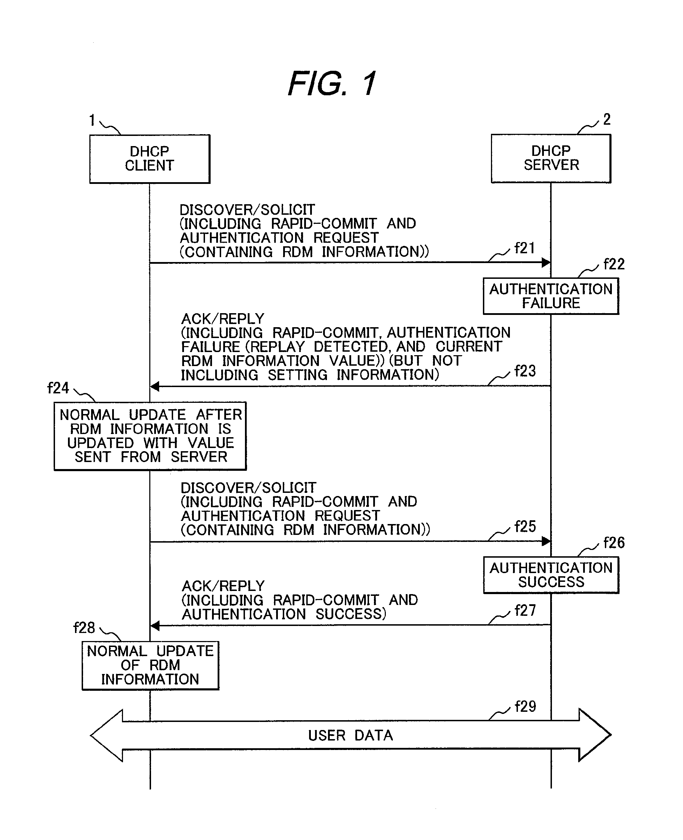

Fig. 1 illustrates a one-phase two-message DHCP sequence employing Rapid-Commit and signifying a case where RDM information is discrepant between the DHCP client device 1 and DHCP server device 2 and the system of the present invention modifies the discrepancy in the RDM information. The DHCP client device 1 sends out a Discover (DHCPv4) or Solicit (DHCPv6) message f21 including a Rapid-Commit option and an option that signifies an authentication request. The option signifying the authentication request and being included in the f21 contains a user ID, RDM information, and a hash value produced from a secret key and the RDM information. After receiving the message f21, the DHCP server device 2 extracts the user ID, RDM information, and hash value from the authentication option, and searches the DB with the user ID as a key so as to retrieve the secret key and RDM information. As a result of comparison of the RDM information, which is extracted from the authentication option, with the RDM information, which is retrieved from the DB, according to a predetermined technique (for example, comparison in a size), if a decision is made that the message is a retransmission (for example, the RDM information extracted from the option is equal to or smaller than the RDM information retrieved from the DB) (f22), a response message including an authentication failure option is transmitted. At this time, a status code signifying retransmission detection and RDM information retained in the DB are contained in the authentication failure option (f23). The DHCP client device 1 having received the message f23 recognizes from the status code of the authentication failure option that the server device has decided that the message is a retransmission. The DHCP client device 1 overwrites the RDM information contained in the authentication failure option with the own RDM information, and updates the own RDM information according to the predetermined technique (f24). A Discover (DHCPv4) or Solicit (DHCPv6) message f25 including the Rapid-Commit option and the option signifying an authentication request is sent out again. The option signifying the authentication request and being included in the f25 contains a user ID, RDM information, and a hash value produced from a secret key and the RDM information. After receiving the message f25, the DHCP server device 2 extracts the user ID, RDM information, and hash value from the authentication option, searches the DB with the user ID as a key so as to retrieve the secret key and RDM information. The RDM information extracted from the authentication option and the RDM information retrieved from the DB are compared with each other according to a predetermined technique (for example, comparison in a size). If a decision is made that the message is not a retransmission, a hash value is calculated using the secret key retrieved from the DB and the RDM information extracted from the option, and compared with the hash value extracted from the option. If the hash values are squared with each other, it is recognized as an authentication success (f26). An ACK (DHCPv4) or Reply (DHCPv6) message including various pieces of setting information such as the Rapid-Commit option, authentication success option, and IP address or prefix is then transmitted (f27). The DHCP client device 1 having received the ACK or Reply message including the authentication success option updates the own RDM information according to a predetermined technique (for example, increment) (f28). In addition, the DHCP client device performs its settings on the basis of the pieces of setting information included in the message. Through the foregoing sequence, user data becomes communicable (f29).

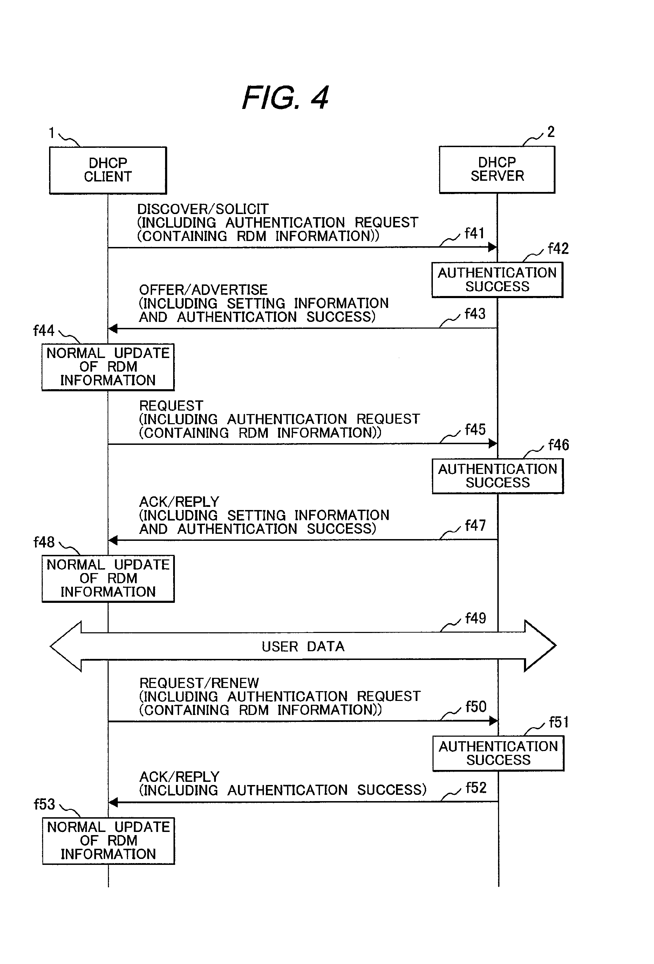

Fig. 4 illustrates a two-phase four-message DHCP sequence that does not employ Rapid-Commit and signifies a case where the system of the present invention has succeeded in authentication. The DHCP client device 1 sends out a Discover (DHCPv4) or Solicit (DHCPv6) message f41 including an option signifying an authentication request. The option signifying the authentication request and being included in the f41 contains a user ID, RDM information, and a hash value produced from a secret key and the RDM information. After receiving the message f41, the DHCP server device 2 extracts the user ID, RDM information, and hash value from the authentication option, and searches the DB with the user ID as a key so as to retrieve the secret key and RDM information. The RDM information extracted from the authentication option and the RDM information retrieved from the DB are compared with each other according to a predetermined technique (for example, comparison in a size). If a decision is made that the message is not a retransmission, a hash value is calculated using the secret key retrieved from the DB and the RDM information extracted from the option, and compared with the hash value extracted from the option. If the hash values are squared with each other, it is recognized as an authentication success (f42). An Offer (DHCPv4) or Advertise (DHCPv6) message including various pieces of setting information such as an authentication success option and an IP address or prefix is then transmitted (f43). The DHCP client device 1 having received the Offer or Advertise message including the authentication success option updates the own RDM information according to a predetermined technique (for example, increment) (f44). A Request message f45 including an option that signifies an authentication request is then sent out. The option signifying the authentication request and being included in the f44 contains a user ID, RDM information, and a hash value produced from a secret key and the RDM information. After receiving the message f45, the DHCP server device 2 extracts the user ID, RDM information, and hash value from the authentication option, and searches the DB with the user ID as a key so as to retrieve the secret key and RDM information. The RDM information extracted from the authentication option and the RDM information retrieved from the DB are compared with each other according to a predetermined method (for example, comparison in a size). If a decision is made that the message is not a retransmission, a hash value is calculated using the secret key retrieved from the DB and the RDM information extracted from the option, and compared with the hash value extracted from the option. If the hash values are squared with each other, it is recognized as an authentication success (f46). An ACK (DHCPv4) or Reply (DHCPv6) message including various pieces of setting information such as an authentication success option and an IP address or prefix is then transmitted (f47). The DHCP client device 1 having received the ACK or Reply message including the authentication success option updates the own RDM information according to a predetermined technique (for example, increment) (f48). In addition, the DHCP client device 1 performs its settings on the basis of the pieces of setting information included in the message. Through the foregoing sequence, user data becomes communicable (f49). Since the IP address or prefix notified under the DHCP has an expiration date, it is necessary to renew the expiration data prior to expiration (lease renewal). If authentication is performed at the time of lease renewal, the authentication is carried out according to a sequence described below. The DHCP client device 1 sends out a Request (DHCPv4) or Renew (DHCPv6) message f50 including an option that signifies an authentication request. The option signifying the authentication request and being included in the f50 contains a user ID, RDM information, and a hash value produced from a secret key and the RDM information. After receiving the message f50, the DHCP server device 2 extracts the user ID, RDM information, and hash value from the authentication option, and searches the DB with the user ID as a key so as to retrieve the secret key and RDM information. The RDM information extracted from the authentication option and the RDM information retrieved from the DB are compared with each other according to a predetermined technique (for example, comparison in a size). If a decision is made that the message is not a retransmission, a hash value is calculated using the secret key retrieved from the DB and the RDM information extracted from the option, and compared with the hash value extracted from the option. If the hash values are squared with each other, it is recognized as an authentication success (f51). An ACK (DHCPv4) or Reply (DHCPv6) message including an authentication success option and a new expiration data of an IP address or prefix is then transmitted (f52). The DHCP client device 1 having received the ACK or Replay message that includes the authentication success option updates the own RDM information according to a predetermined technique (for example, increment) (f53). In addition, the expiration date of the IP address or prefix is renewed based on the new expiration date included in the message. Through the foregoing procedure, the lease renewal for the IP address or prefix is achieved.

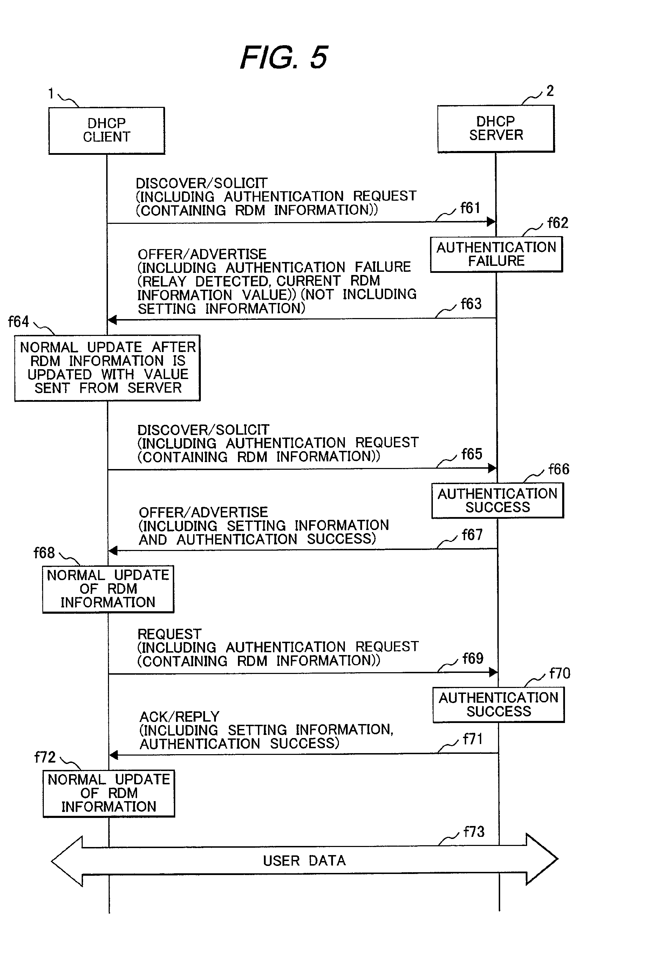

Fig. 5 illustrates a two-phase four-message DHCP sequence that does not employ Rapid-Commit and signifies a case where RDM information is discrepant between the DHCP client device 1 and DHCP server device 2 and the system of the present invention modifies the discrepancy in the RDM information. The DHCP client device 1 sends out a Discover (DHCPv4) or Solicit (DHCPv6) message including an option that signifies an authentication request. The option signifying the authentication request and being included in the f61 contains a user ID, RDM information, and a hash value produced from a secret key and the RDM information. After receiving the message f61, the DHCP server device 2 extracts the user ID, RDM information, and hash value from the authentication option, and searches the DB with the user ID as a key so as to retrieve the secret key and RDM information. As a result of comparison of the RDM information, which is extracted from the authentication option, with the RDM information, which is retrieved from the DB, according to a predetermined technique (for example, comparison in a size), if a decision is made that the message is a retransmission (for example, the RDM information extracted from the option is equal to or smaller than the RDM information retrieved from the DB) (f62), a response message including an authentication failure option is transmitted. At this time, the authentication failure option contains a status code signifying retransmission detection and RDM information retained in the DB (f63). The DHCP client device 1 having received the message f63 recognizes from the status code of the authentication failure option that the server device has decided that the message is a retransmission, overwrites the RDM information, which is included in the authentication failure option, with the own RDM information, and updates the own RDM information according to the predetermined technique (f64). A Discover (DHCPv4) or Solicit (DHCPv6) message f65 including an option that signifies an authentication request is sent out again. The option signifying the authentication request and being included in the f65 contains a user ID, RDM information, and a hash value produced from a secret key and the RDM information. After receiving the message f65, the DHCP server device 2 extracts the user ID, RDM information, and hash value from the authentication option, and searches the DB with the user ID as a key so as to retrieve the secret key and RDM information. The RDM information extracted from the authentication option and the RDM information retrieved from the DB are compared with each other according to a predetermined technique (for example, comparison in a size). If a decision is made that the message is not a retransmission, a hash value is calculated using the secret key retrieved from the DB and the RDM information extracted from the option, and compared with the hash value extracted from the option. If the hash values are squared with each other, it is recognized as an authentication success (f66). An Offer (DHCPv4) or Advertise (DHCPv6) message including various pieces of setting information such as an authentication success option and an IP address or prefix is then transmitted (f67). The DHCP client device 1 having received the Offer or Advertise message including the authentication success option updates the own RDM information according to a predetermined technique (for example, increment) (f68). A Request message f69 including an option that signifies an authentication request is sent out. The option signifying the authentication request and being included in the f69 contains a user ID, RDM information, and a hash value produced from a secret key and the RDM information. After receiving the message f69, the DHCP server device 2 extracts the user ID, RDM information, and hash value from the authentication option, and searches the DB with the user ID as a key so as to retrieve the secret key and RDM information. The RDM information extracted from the authentication option and the RDM information retrieved from the DB are compared with each other according to a predetermined technique (for example, comparison in a size). If a decision is made that the message is not a retransmission, a hash value is calculated using the secret key retrieved from the DB and the RDM information extracted from the option, and compared with the hash value extracted from the option. If the hash values are squared with each other, it is recognized as an authentication success (f70). An ACK (DHCPv4) or Reply (DHCPv6) including various pieces of setting information such as an authentication success option and an IP address or prefix is then transmitted (f71). The DHCP client device 1 having received the ACK or Reply message including the authentication success option updates the own RDM information according to a predetermined technique (for example, increment) (f72). In addition, the DHCP client device 1 performs its settings on the basis of the pieces of setting information included in the message. Through the foregoing sequence, user data becomes communicable (f73).

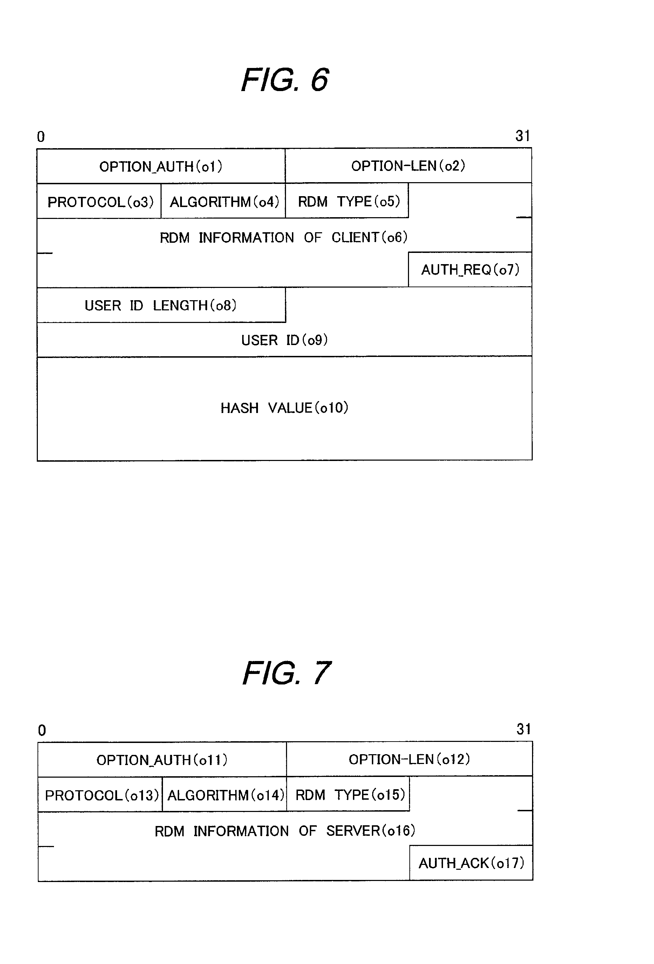

Fig. 6 is a diagram expressing an authentication request option of the present invention by utilizing an Authentication option of the DHCPv6. O1 denotes a field of 2 bytes long for signifying an option type defined in the RFC 3315, and the value is OPTION_AUTH(=11). 02 specifies the length of an option or the number of bytes obtained by adding up those of o3 to o9. 03 specifies a protocol, and the value is any value that is equal to or larger than 4 but is currently not defined by the IANA. 04 specifies an algorithm (MD5, SHA-1, or the like) for calculating a hash value in o9. 05 specifies a value representing an RDM type. A value currently defined by the IANA is a monotonic increase counter (=0). 06 specifies an actual value of RDM information that is defined as 64 bits = 8 bytes under the RFC 3315. 07 denotes a field for signifying the type of an authentication option, and a value representing an authentication request, AUTH_REQ (for example, 1), is entered therein. In the drawing, o7 is 1 byte long. Alternatively, a length equal to or larger than 1 byte may be used for representation. 08 specifies the length of a user ID or the number of bytes of o9. In the drawing, o8 specifies 2 bytes. Alternatively, a length equal to or larger than 2 bytes may be used for representation, or 1 byte may be used for representation as long as 1 byte is long enough. In o9, an actual user ID is entered with a character string or a numerical value. O10 specifies a hash value or a value produced by applying a hash computation algorithm, which is specified in o4, to a data stream containing at least the RDM information in o6 and a secret key a DHCP client device has. The length of o10 is determined by the hash computation algorithm specified in o4 (for example, in the case of the MD5, 128 bits = 16 bytes).

Fig. 7 is a diagram expressing an authentication success option of the present invention by utilizing an Authentication option of the DHCPv6. O11 denotes a field of 2 bytes long for signifying an option type defined under the RFC 3315, and the value is OPTION_AUTH(=11). O12 specifies the length of an option or the number of bytes obtained by adding up those of o13 to o17. O13 specifies a protocol, and the same value as that of an authentication request is entered therein. O14 specifies an algorithm for calculating a hash value (MD5, SHA-1, or the like). Since the hash value is not actually contained in the authentication success option, the value may be any value. Normally, the value in an authentication request option is used as it is. O15 specifies a value representing the type of an RDM. A value currently defined by the IANA is a monotonic increase counter (=0). O16 specifies a value of RDM information. In the present invention, since a client side does not check an option sent from a server for the RDM information, the value may be any numeral (for example, 0). O17 denotes a field for signifying the type of an authentication option, and a value representing an authentication success, AUTH_ACK (for example, 2), is entered therein. In the drawing, O17 is 1 byte long. Alternatively, a length equal to or larger than 1 byte may be used for representation.

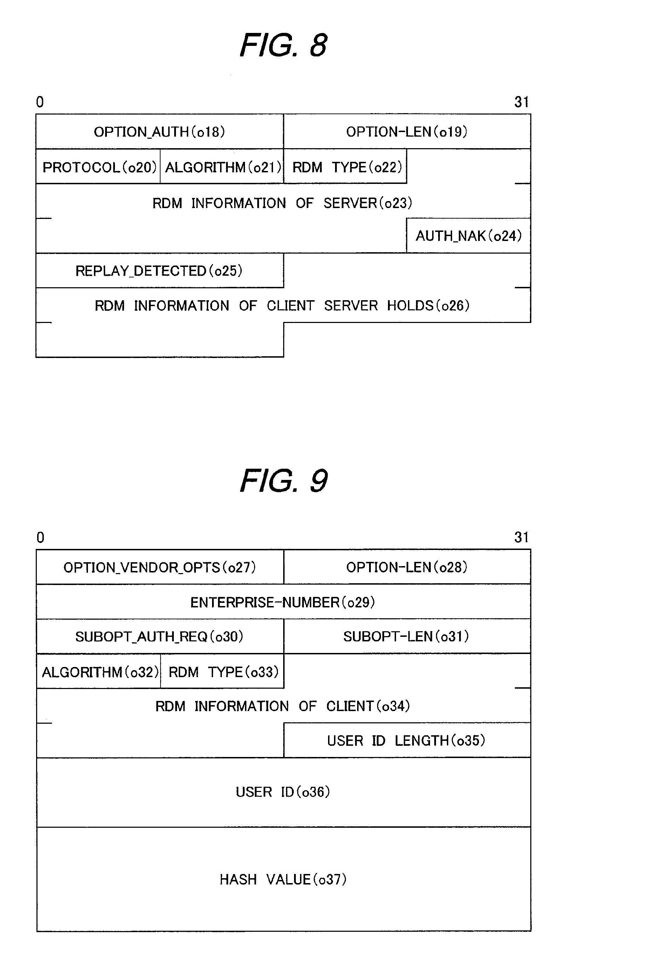

Fig. 8 is a diagram expressing an authentication failure option, which specifies retransmission detection of the present invention as a cause, by utilizing an Authentication option of the DHCPv6. O18 denotes a field of 2 bytes long for signifying an option type defined in the RFC 3315, and the value is OPTION_AUTH (=11). O19 specifies the length of an option or the number of bytes obtained by adding up those of o20 to o26. 020 specifies a protocol, and the same value as that of an authentication request is entered therein. 021 specifies an algorithm for calculating a hash value (MD5, SHA-1, or the like). Since the hash value is, in practice, not contained in an authentication failure option, the value may be any value. Normally, the value in the authentication request option is used as it is. 022 specifies a value representing the type of an RDM. A value currently defined by the IANA is a monotonic increase counter (=0). 023 specifies a value of RDM information. In the present invention, since a client side does not check an option sent from a server for the RDM information, the value may be any numerical value (for example, 0). 024 denotes a field for signifying the type of an authentication option, and a value representing an authentication failure, AUTH_NAK (for example, 3), is entered therein. In the drawing, o24 is 1 byte long. Alternatively, a length equal to or larger than 1 byte may be used for representation. 025 specifies a status code representing an authentication failure cause. In relation to a failure due to retransmission detection, a value representing the retransmission detection, REPLAY_DETECTED (for example, 1), is entered in o25. In the other cases, a value associated with the cause is entered. If o25 specifies REPLAY_DETECTED, an RDM information value associated with a client a server has retrieved from the DB is entered in o26.

Fig. 6 to Fig. 8 illustrate the case of the DHCPv6. In the case of the DHCPv4, the option type (o1, o11, o18) is 1 byte long and the value is 90 (Authentication), and the option length (o2, o12, o19) is 1 byte long. The others are identical to those under the DHCPv6.

In Fig. 6 to Fig. 8, an Authentication option of the DHCPv6 is used to express the authentication request, authentication success, and authentication failure options. Alternatively, a Vender-Specific Information option may be used.

Fig. 9 is a diagram in which the authentication request option of the present invention is expressed by utilizing the Vendor-Specific Information option of the DHCPv6. 027 denotes a field of 2 bytes long for signifying an option type defined in the RFC 3315, and the value is OPTION_VENDOR_OPTS (=17). 028 specifies the length of an option or the number of bytes obtained by adding up those of o29 to o37. 029 denotes a field of 32 bits=4 bytes long in which an enterprise number is stored. An enterprise number assigned to an entity that attempts to implement the present invention is the value. 030 denotes a field for signifying the type of a sub-option, and a value representing an authentication request, SUBOPT_AUTH_REQ (for example, 1), is entered therein. 031 specifies the length of a sub-option or the number of bytes obtained by adding up those of o32 to o37. 032 specifies an algorithm for calculating a hash value in o37 (MD5, SHA-1, or the like). 033 specifies a value representing the type of an RDM. A value currently defined by the IANA is a monotonic increase counter (=0). 034 specifies an actual value of RDM information that is 64 bits=8 bytes long in conformity with an Authentication option. 035 specifies the length of a user ID that is the number of bytes of o36. In the drawing, o35 specifies 2 bytes. Alternatively, a length equal to or larger than 2 bytes may be used to represent the user ID, or 1 byte may be used as long as it is long enough. 036 specifies an actual user ID, and a character string or a numerical value is entered therein. 037 specifies a hash value that is a value produced by applying the hash computation algorithm specified in o32 to a data stream containing at least the RDM information in o34 and a secret key a DHCP client device has. The length of o37 is determined with the hash computation algorithm specified in o32 (for example, for the MD5, 128 bits = 16 byes).

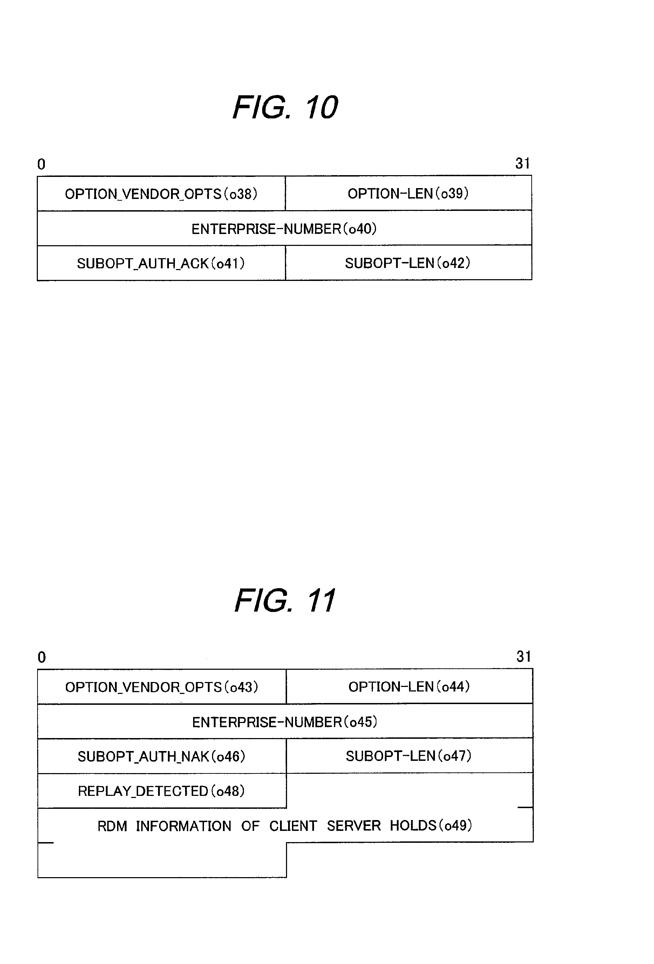

Fig. 10 is a diagram expressing an authentication success option of the present invention by utilizing a Vendor-Specific Information option of the DHCPv6. 038 denotes a field of 2 bytes long for signifying an option type defined in the RFC 3315, and the value is OPTION_VENDOR_OPTS (=17). 039 specifies the length of an option or the number of bytes obtained by adding up those of o40 to o42. 040 denotes a field of 32 bits=4 bytes long in which an enterprise number is stored, and an enterprise number assigned to an entity that attempts to implement the present invention is the value. 041 denotes a field for signifying the type of a sub-option, and a value representing an authentication success, SUBOPT_AUTH_ACK (for example, 2), is entered therein. 042 specifies the length of the sub-option that is 0.

Fig. 11 is a diagram expressing an authentication failure option of the present invention, which specifies retransmission detection as a cause, by utilizing the Vendor-Specific Information option of the DHCPv6. 043 denotes a field of 2 bytes long for signifying an option type defined in the RFC 3315, and the value is OPTION_VENDOR_OPTS (=17). 044 specifies the length of an option or the number of bytes obtained by adding up those of o45 to o49. 045 denotes a field of 32 bits=4 bytes long in which an enterprise number is stored, and an enterprise number assigned to an entity that attempts to implement the present invention is the value. 046 denotes a field for signifying the type of a sub-option, and a value representing an authentication failure, SUBOPT_AUTH_NAK (for example, 3), is entered therein. 047 specifies the length of the sub-option that is a value obtained by adding up those of o48 and o49. 048 specifies a status code representing an authentication failure cause. As for a failure due to retransmission detection, a value representing the retransmission detection, REPLAY_DETECTED (for example, 1), is entered in o48. In any other case, a value associated with the cause is entered. If o48 specifies REPLAY_DETECTED, an RDM information value associated with a client a server has retrieved from the DB is entered in o49.

Fig. 9 to Fig. 11 illustrate the case of the DHCPv6. In the case of the DHCPv4, the option type (o27, o38, o43) is 1 byte long, and the value is 125 (Vendor-Identifying Vendor-Specific Information). Each of the option length (o28, o39, o44), sub-option type (o30, o41, o46), and sub-option length (o31, o42, o47) is 1 byte long. The others are identical to those in the case of the DHCPv6.

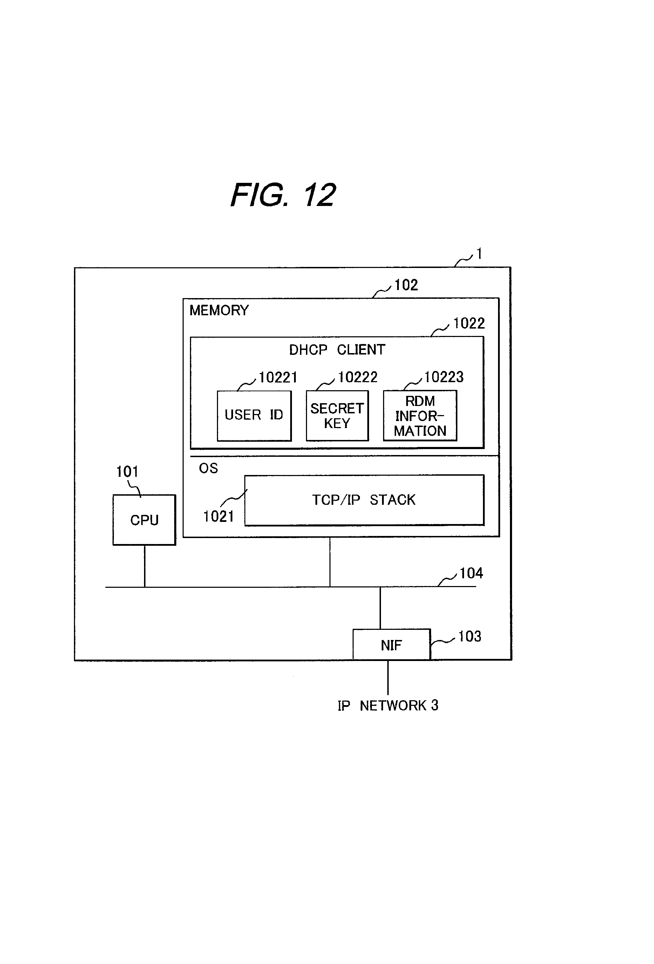

Fig. 12 illustrates an example of the configuration of the DHCP client device 1. Illustrated is a typical DHCP client device having a CPU 101, a memory 102, and an NIF 103 interconnected over a bus 104. A TCP/IP stack 1021 installed in an OS is present in the memory, whereby IP communications are enabled. In addition, DHCP client software 1022 exists as an application in the OS. The DHCP client software 1022 has an area 10221 in which a user ID is stored, an area 10222 in which a secret key is stored, and an area 10223 in which RDM information is stored.

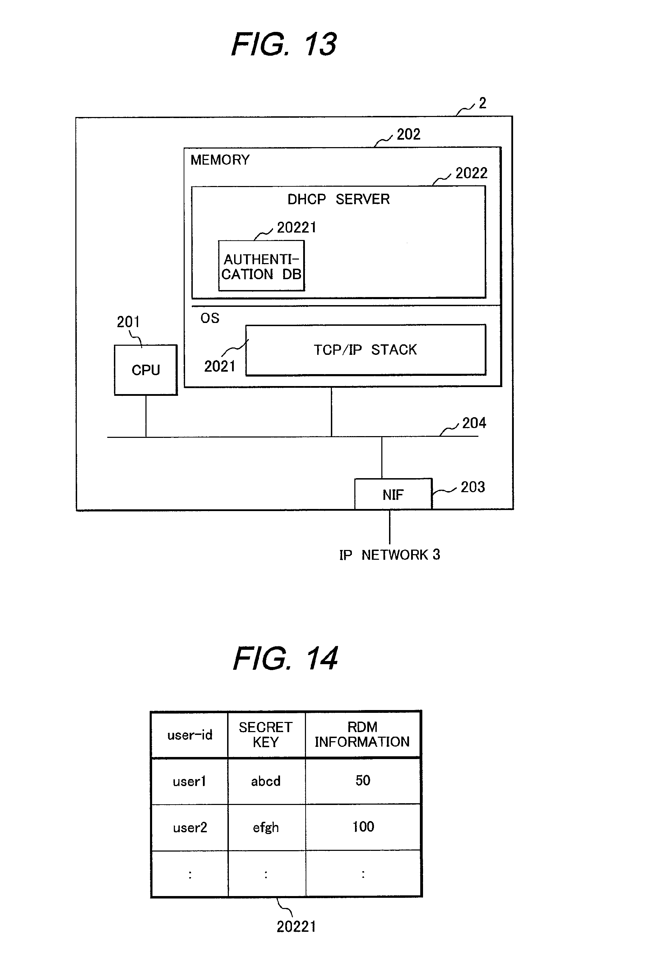

Fig. 13 illustrates an example of the configuration of the DHCP server device 2. Illustrated is a typical DHCP server device having a CPU 201, a memory 202, and an NIF 203 interconnected over a bus 204. A TCP/IP stack 2021 installed in an OS is present in the memory, whereby IP communications are enabled. In addition, DHCP server software 2022 exists as an application in the OS, and an authentication database 20221 exists therein. In the drawing, the authentication database is incorporated in the DHCP server software. Conceivably, the authentication database may be provided as software that operates independently of the DHCP server software, and only a feature that accesses the authentication database may be installed in the DHCP server software. In this case, the authentication database may conceivably operate in another device.

Fig. 14 illustrates an example of the authentication database 20221. A user ID is specified as an index, and used as a key to retrieve a secret key and the current value of RDM information.

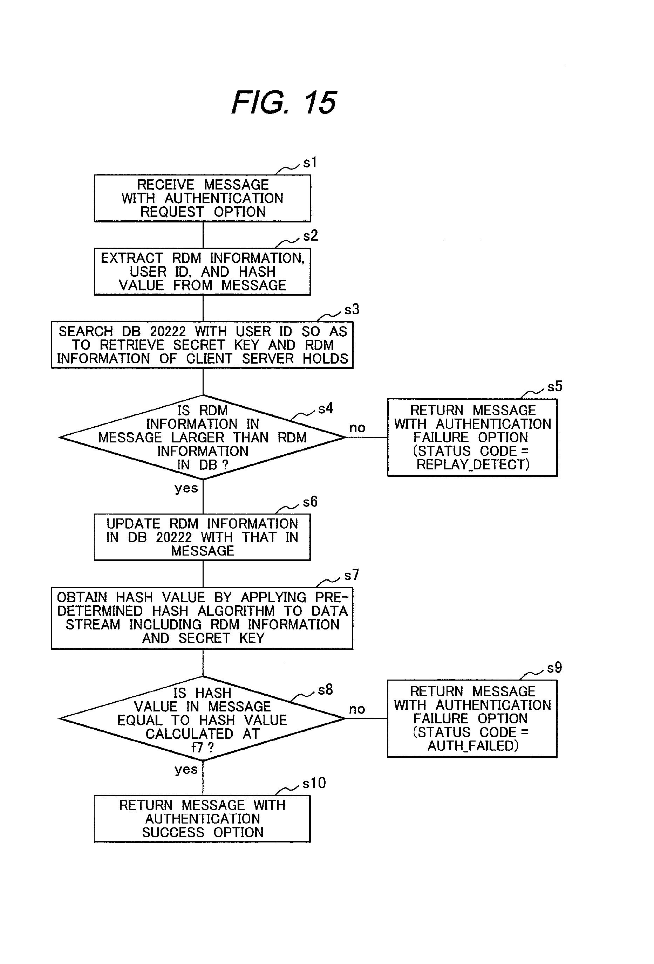

Fig. 15 is a flowchart signifying actions of the DHCP server device 2 in the present invention. When receiving a DHCP message that includes an authentication request option (s1), the DHCP server device 2 extracts a user ID, a hash value, and RDM information from the option (s2), and searches the DB with the user ID as a key so as to retrieve the secret key and RDM information (s3). The RDM information extracted from the option and the RDM information retrieved from the DB are compared with each other according to a predetermined technique (for example, comparison in a size) (s4). If a decision is made that the message is a retransmission (for example, the RDM information extracted from the option is equal to or smaller than the RDM information retrieved from the DB), a response message including an authentication failure option is transmitted. At this time, the RDM information retained in the DB is contained in the authentication failure option (s5).

If a decision is made that the message is not a retransmission, the RDM information in the DB 20222 is updated with the one contained in the authentication request option (s6). A hash value is calculated using the secret key retrieved from the DB and the RDM information extracted from the option (s7), and compared with the hash value extracted from the option (s8). If the hash values are squared with each other, it is recognized as an authentication success, and a response message including an authentication success option is transmitted (s10). If the hash values are not squared with each other, a response message including an authentication failure option is transmitted (s9).

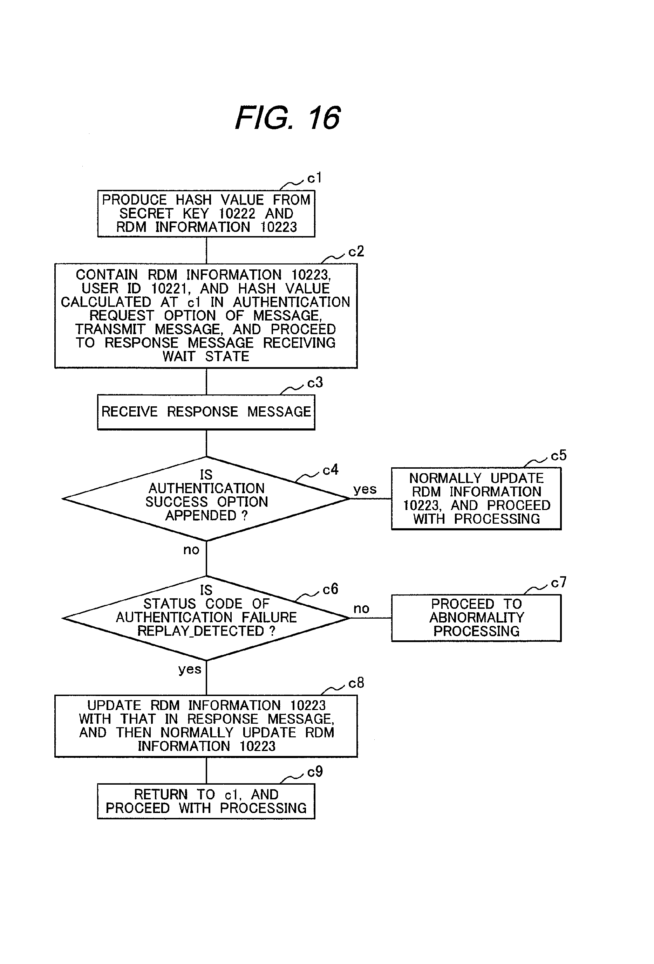

Fig. 16 is a flowchart signifying actions of the DHCP client device 1 in the present invention. The DHCP client device 1 produces a hash value by applying a predetermined hash function to a data stream containing at least a secret key 10222 and RDM information 10223 (c1). An authentication option containing three data items of a user ID 10221, the RDM information 10223, and the hash value is included in a DHCP message, and the DHCP message is transmitted to a server device. The DHCP client device 1 then proceeds to a response message wait state (c2). When receiving a response message (c3), the DHCP client device decides whether an authentication success option is included (c4). If the authentication success option is included, the DHCP client device updates the own RDM information 10223 according to a predetermined technique (for example, increment), and proceeds with DHCP client processing (c5). If the authentication success option is not included, whether the status code of an authentication failure option is REPLAY_DETECTED is decided (c6). If the status code is other than REPLAY_DETECTED, the DHCP client device 1 proceeds to abnormality processing (c7). If the statues code is REPLAY_DETECTED, the DHCP client device 1 overwrites the RDM information contained in the authentication failure option with the own RDM information 10223, updates the own RDM information according to the predetermined technique (c8), returns to c1, and proceeds with the processing (c9).

### INDUSTRIAL APPLICABILITY

The present invention can be utilized as an authentication method for a DHCP client server system, and a server device or a client device of the system.

### BRIEF DESCRIPTION OF THE DRAWINGS

[Fig. 1] illustrates a one-phase two-message DHCP sequence that employs Rapid-Commit and signifies a case where when RDM information is discrepant between a DHCP client device 1 and a DHCP server device 2, a system of the present invention modifies the discrepancy in the RDM information.
[Fig. 2] illustrates an example of a typical network to which the present invention is applied.
[Fig. 3] illustrates a one-phase two-message DHCP sequence that employs Rapid-Commit and signifies a case where the system has succeeded in authentication.
[Fig. 4] illustrates a two-phase four-message DHCP sequence that does not employ Rapid-Commit but signifies a case where the system has succeeded in authentication.
[Fig. 5] illustrates a two-phase four-message DHCP sequence that does not employ Rapid-Commit but signifies a case where RDM information is discrepant between the DHCP client device 1 and DHCP server device 2 and the system modifies the discrepancy in the RDM information.
[Fig. 6] illustrates an authentication request option using an Authentication option of the DHCPv6.
[Fig. 7] illustrates an authentication success option using the Authentication option of the DHCPv6.
[Fig. 8] illustrates an authentication failure option, which signifies retransmission detection as a cause, using the Authentication option of the DHCPv6.
[Fig. 9] illustrates an authentication request option using a Vendor-Specific Information option of the DHCPv6;
[Fig. 10] illustrates an authentication success option using the Vendor-Specific Information option of the DHCPv6.
[Fig. 11] illustrates an authentication failure option, which signifies retransmission detection as a cause, using the Vendor-Specific Information option of the DHCP6.
[Fig. 12] illustrates an example of the configuration of a DHCP client device 1.
[Fig. 13] illustrates an example of the configuration of a DHCP server device 2.
[Fig. 14] illustrates an example of an authentication database 20221.
[Fig. 15] is a flowchart describing actions of the DHCP server device 2.
[Fig. 16] is a flowchart describing actions of the DHCP client device 1.

### EXPLANATION OF REFERENCE NUMERALS AND SYMBOLS

1(1a, 1b): DHCP client device, 2: DHCP server device, 3: IP network, f1, f21, f25: Discover or Solicit (including Rapid-Commit and an authentication request option), f3, f27: ACK or Reply (including Rapid-Commit, an authentication success option, and setting information), f6, f50: Request or Renew (including an authentication request option), f8, f52: ACK or reply (including an authentication success option), f23: ACK or Reply (including Rapid-Commit and an authentication failure option due to retransmission sensing but not including setting information), f41, f65: Discover or Solicit (including an authentication request option), f43, f67: Offer or Advertise (including an authentication success option and setting information), f45, f69: Request (including an authentication request option), f52, f71: ACK or Reply (including an authentication success option and setting information), f63: Offer or Advertise (including an authentication failure option due to retransmission sensing but not including setting information), f5, f29, f49, f73: user data traffic, f2, f7, f26, f42, f46, f51, f66, f70: authentication success processing, f22, f62: authentication failure processing, f4, f9, f28, f44, f48, f53, f68, f72: RDM normal update processing, f24, f64: normal update processing after RDM information is updated with a value sent from a server), o1, o11, o18: option type (OPTION_AUTH), o27, o38, o43: option type (OPTION_VENDOR_OPTS), o2, o12, o19, o28, o38, o43: option length, o3, o13, o20: protocol, o4, o14, o21, o32: hash algorithm, o5, o15, o22, o33: RDM type, o6, o34: RDM information of a client, o16, o23: RDM information of a server (dummy), o7: message type (authentication request), o17: message type (authentication success), o24: message type (authentication failure), o8, o35: user ID length, o9, o36: user ID, o10, o37: hash value, o25, o48: status code (retransmission detection), o26, o49: RDM information of a client a server holds), 101, 202: CPU, 102, 202: memory, 103, 203: NIF, 104, 204: bus, 1021, 2021: TCP/IP stack, 1022: DHCP client software, 10221: user ID memory area, 10222: secret key memory area, 10223: RDM information memory area, 2022: DHCP server software, 20221: authentication database.

## Claims

1. A DHCP client server system including a DHCP server device and a DHCP client device, **characterized in that**:
the DHCP client device includes:
means for storing a user ID, a secret key, and retransmission detection information,
means for calculating key authentication information from a data stream that contains the secret key and the retransmission detection information,
means for transmitting a DHCP message that includes the user ID, the retransmission detection information, and the key authentication information, and
means for performing update through computation of the retransmission detection information; and
the DHCP server device includes:
means for, when receiving the DHCP message, extracting the user ID, the retransmission detection information, and the key authentication information from the DHCP message,
a database search facility for retrieving a secret key and retransmission detection information on the basis of the user ID extracted from the DHCP message,
means for comparing the retransmission detection information extracted from the DHCP message with the retransmission detection information retrieved from the database so as to detect a retransmission circumstance,
means for calculating key authentication information from a data stream that contains the retransmission detection information extracted from the DHCP message and the secret key retrieved from the database, and
means for collating the calculated key authentication information with the key authentication information extracted from the DHCP message so as to decide about authentication.

2. The DHCP client server system according to Claim 1, **characterized in that** the means for transmitting a DHCP message transmits the DHCP message without receiving a DHCP message that includes authentication information and is transmitted from the DHCP server.

3. The DHCP client server system according to Claim 1, **characterized in that**:
the means for calculating key authentication information calculates the key authentication information from the data stream, which contains the secret key and the retransmission detection information, through hash computation; and
the key authentication information is a hash value.

4. The DHCP client server system according to Claim 1, **characterized in that** the DHCP message is a first message transmitted from the client device.

5. The DHCP client server system according to Claim 1, **characterized in that**:
the means for performing update through computation of retransmission detection information performs monotonic increase computation;
the means for detecting a retransmission circumstance by comparing the retransmission detection information extracted from the DHCP message with the retransmission detection information retrieved from the database detects whether the retransmission detection information extracted from the DHCP message is equal to or smaller than the retransmission detection information retrieved from the database; and
if the retransmission detection information extracted from the DHCP message is equal to or smaller than the retransmission detection information, the authentication is recognized as a failure.

6. The DHCP client server system according to Claim 1, **characterized in that**:
if the authentication succeeds, the DHCP server device transmits a DHCP message, which includes an authentication success option, to the DHCP client device; and
if the authentication fails, the DHCP server device transmits a DHCP message, which includes an authentication failure option, to the DHCP client device.

7. The DHCP client server system according to Claim 6, **characterized in that** if the authentication fails because a retransmission circumstance is detected, the DHCP server device specifies a Replay Detected status code in the authentication failure option, and transmits a DHCP message, which includes the authentication failure option and the retransmission detection information retrieved from the database, to the DHCP client device.

8. The DHCP client server system according to Claim 7, **characterized in that** when receiving the DHCP message, the DHCP client device overwrites and updates the retransmission detection information, which is stored in the storing means, with the retransmission detection information included in the DHCP message so as to create a DHCP message, and transmits the DHCP message.

9. A DHCP client device comprising:
means for storing a user ID, a secret key, and retransmission detection information;
means for calculating key authentication information from a data stream that contains the secret key and the retransmission detection information;
means for transmitting, to a DHCP server, a DHCP message that includes the user ID, the retransmission detection information, and the key authentication information; and
means for updating the retransmission detection information.

10. The DHCP client device according to Claim 9, **characterized in that**:
the means for calculating key authentication information calculates the key authentication information from the data stream, which contains the secret key and the retransmission detection information, through hash computation; and
the key authentication information is a hash value.

11. The DHCP client device according to Claim 9, **characterized in that** the DHCP message is a first message transmitted from the client device.

12. The DHCP client device according to Claim 9, **characterized in that** the means for performing update through computation of retransmission detection information performs monotonic increase computation.

13. The DHCP client device according to Claim 9, **characterized in that** when a DHCP message including a Replay Detected status code, and retransmission detection information retrieved from a database of the DHCP server device is received from the DHCP server device, a DHCP message is created by overwriting and updating the retransmission detection information, which is stored in the storing means, with the retransmission detection information included in the DHCP message, and transmitted.

14. A DHCP server device comprising:
means for extracting a user ID, retransmission detection information, and key authentication information from a DHCP message received from a DHCP client device;
a database search facility for retrieving a secret key and retransmission detection information on the basis of the user ID;
means for detecting a retransmission circumstance by comparing the retransmission detection information extracted from the DHCP message with the retransmission detection information retrieved from the database;
means for calculating key authentication information from a data stream that contains at least the retransmission detection information extracted from the DHCP message and the secret key retrieved from the database; and
means for collating the calculated key authentication information with the key authentication information extracted from the message, and deciding about authentication.

15. The DHCP server device according to Claim 14 **characterized in that**:
the means for detecting a retransmission circumstance by comparing the retransmission detection information extracted from the DHCP message with the retransmission detection information retrieved from the database detects whether the retransmission detection information extracted from the DHCP message is equal to or smaller than the retransmission detection information retrieved from the database; and
if the retransmission detection information extracted from the DHCP message is equal to or smaller than the retransmission detection information, the authentication is recognized as a failure.

16. The DHCP server device according to Claim 14 **characterized in that**:
If the authentication succeeds, a DHCP message including an authentication success option is transmitted to the DHCP client device; and
if the authentication fails, a DHCP message including an authentication failure option is transmitted to the DHCP client device.

17. The DHCP server device according to Claim 16 **characterized in that** if the authentication fails because a retransmission circumstance is detected, a Replay Detected status code is specified in the authentication failure option, and a DHCP message including the authentication failure option and the retransmission detection information retrieved from the database is transmitted to the DHCP client device.
